# EUROPÄISCHE PATENTSCHRIFT

(11) **EP 1 671 820 B1**
(45) Veröffentlichungstag und Bekanntmachung des Hinweises auf die Patenterteilung: **30.05.2012**
(21) Anmeldenummer: 05027497.6
(22) Anmeldetag: 15.12.2005
(51) Int. Cl.: B60C 25/14, B60C 25/132

(54) **Reifenfüllstation und Verfahren zur Reifenfüllung**
Tyre inflation station and method to inflate tyres
Station de gonflage de pneumatiques et méthode de gonflage de pneumatiques

(30) Priorität: 20.12.2004 DE 102004062329
(43) Veröffentlichungstag der Anmeldung: 21.06.2006
(73) Patentinhaber: Schenck RoTec GmbH, 64293 Darmstadt (DE)
(72) Erfinder: Peinelt, Andreas, 64319 Pfungstadt (DE); Rogalla, Martin, 64297 Darmstadt (DE); Lehr, Werner, 64397 Modautal (DE); Lehmann, Roland, 64293 Darmstadt (DE)
(74) Vertreter: Haar, Lucas Heinz Jörn

(56) Entgegenhaltungen:
- DE-A1- 10 007 019
- DE-A1- 19 801 455

## Beschreibung

Die Erfindung bezieht sich auf eine Reifenfüllstation, der aus einer Radfelge und einem auf die Radfelge montierten Reifen bestehende Rad/Reifenanordnungen zuführbar sind, mit einer Reifenfüllglocke mit zumindest zwei Füllringen unterschiedlichen Durchmessers, wobei der Rand eines Füllrings gegen eine Seitenfläche des Reifens anlegbar ist und mit einer Dichteinrichtung zur Abdichtung des Füllraums. Die Erfindung bezieht sich ferner auf ein Verfahren zur Reifenfüllung eines auf einer Radfelge montierten Reifens in eine Reifenfüllstation bei dem die Rad/Reifenanordnung in die Reifenfüllstation gebracht und dort gelagert wird, bei dem mittels einer Reifenfüllglocke die zumindest zwei Füllringe unterschiedlichen Durchmessers umfaßt, durch Anlegen eines Füllrings an einer Seitenfläche ein ringförmiger Zugang zwischen Reifen und Radfelge zur Füllung des Reifens mit Druckluft hergestellt und der Füllraum ansonsten abgedichtet wird und die Füllung erfolgt.

Bei der Serienfertigung von Kraftfahrzeugen werden Rad/Reifenanordnungen, bestehend aus einer Radfelge und einem auf die Radfelge aufgebrachten Reifen, die unterschiedlichste Abmessungen bzw. Dimensionen aufweisen, am Kraftfahrzeug montiert. Die Rad/Reifenanordnungen werden dabei üblicherweise einer Reifenfüllstation zugeführt, die Teil eines Reifenmontagesystems und/oder einer Räderauswuchtanlage ist. Das fertige Rad wird schließlich der Montagelinie für das Kraftfahrzeug zugeführt.

Ein Verfahren zur Reifenfüllung und eine Reifenfüllstation der eingangs genannten Art sind aus der DE 100 07 019 A1 bekannt. Die Rad/Reifenanordnung wird nach dieser Veröffentlichung so in der Reifenfüllstation eingelagert, dass sie mit der unteren Seitenfläche des Reifens auf einer Auflageplatte abgedichtet aufliegt. Oberhalb der oberen Seite der Rad/Reifenanordnung ist eine Reifenfüllglocke angeordnet, die zum Reifenfüllvorgang abgesenkt wird und mit ihrem ringförmigen Rand die Reifenseitenwand von der Felge wegdrückt, so dass ein ringförmiger Raum zwischen Reifenseitenwand und Radfelge entsteht, über den die Druckluftfüllung des Reifens erfolgt. Die Druckluft strömt in die Füllglocke und von dort über den Ringraum ins Reifeninnere und bewegt schließlich die Reifenseitenwand unter Schließung des Ringraums in Anlage an die Felge. Durch die Ausbildung der Füllglocke aus zwei ineinander geschachtelten Füllglocken, die am offenen Ende ringförmige Fortsätze mit zwei unterschiedlichen Durchmessern aufweisen, können Räder mit unterschiedlichen Reifen- und/oder Felgengrößen gefüllt werden. Mit jeder der beiden Füllglocken werden üblicherweise Räder mit drei aufeinanderfolgenden Felgengrößen bedient, also insgesamt ein Spektrum von sechs unterschiedlichen Größen bzw. Dimensionen. Die Wirtschaftlichkeit beim Einsatz der Füllstationen verlangt, mit einer Station eine möglichst hohe Anzahl von Rädergrößen bedienen zu können. Dabei erheben die Kunden stetig steigende Qualitätsansprüche in Hinsicht auf die Reproduzierbarkeit des Reifendrucks. Werden pro Füllglocke Räder mit drei aufeinanderfolgenden Felgengröβen bedient, so lassen sich steigende Qualitätsansprüche in Hinblick auf die Reproduzierbarkeit des Reifendrucks nicht immer erfüllen.

Bei einer aus DE 198 01 455 A1 bekannten Reifenfüllstation, die dem Oberbegriff des Patentanspruchs 1 zugrunde liegt, sind mehrere Füllringe konzentrisch zueinander in der Reifenfüllglocke angeordnet und mittels doppelt wirkenden Zylindem längs der Achslinie der Rad/Reifenanordnung relativ zur Füllplatte bewegbar. Die Füllringe sind an Führungsringen geführt und gedichtet, die an der Füllplatte befestigt sind.

Der Erfindung liegt die Aufgabe zugrunde, mit einfachen Mitteln eine hohe Füllgenauigkeit bzw. eine gute Reproduzierbarkeit des Reifendrucks von auf einer Füllstation zu bedienenden Rad/Reifenanordnungen unterschiedlichster Größen bzw. Dimensionen sicherzustellen.

Diese Aufgabe wird erfindungsgemäß durch die Reifenfüllstation mit den Merkmalen der Patentansprüche 1 und 15 gelöst.

Die Aufgabe wird ferner nach dem erfindungsgemäßen Verfahren mit den Merkmalen der Patentansprüche 12 oder 13 gelöst. Der Erfindung liegt die Erkenntnis zugrunde, dass der Größenabstand zwischen Felgen-Außendurchmesser und Füllglocken-Innendurchmesser die kritische Größe für die Genauigkeit des Reifendrucks ist. Je kleiner dieser Abstand ist, desto besser ist die Genauigkeit des Reifendrucks. Im Idealfall würde jeder Felgengröße eine individuell passende Füllglocke gegenüberstehen. Mit der Erfindung kommt man dem Idealfall hinreichend nahe. Die beiden an sich gegenläufigen Forderungen, nämlich die Bedienbarkeit einer hohen Anzahl unterschiedlicher Rädergrößen einerseits und die Sicherstellung eines genauen Fülldrucks andererseits, werden mit der Erfindung beide sehr gut erfüllt Mit der erfindungsgemäßen Lösung wird das Prinzip von aufwendig ineinandergeschachtelten Füllglocken aufgegeben und ersetzt durch die Anordnung nur einer Füllglocke, die aus einer Füllplatte und einem Füllring zusammengesetzt wird, der aus einer Vielzahl von Füllringen auswählbar ist. Die Füllplatte ist dabei in der Achslinie der Rad/Reifenanordnung angeordnet und jeder der Füllringe ist in die Achslinie bis zur zentrischen Anordnung hineinbewegbar. Die Füllplatte, deren Plattenebene quer zur Achslinie verläuft, ist gegen den Rand des Füllrings dicht anlegbar, so dass eine Füllglocke gebildet wird. Bei Weiterverschiebung in Achsrichtung öffnet der andere Rand des Füllrings den Ringraum zwischen Reifen und Felge und ermöglicht den Füllvorgang und das Erreichen eines genauen Fülldrucks. Das erfindungsgemäße Prinzip ermöglicht es, beispielsweise sechs Füllglocken unterschiedlichen Öffnungsdurchmessers in einer Füllstation zu verwenden. Es hat sich in überraschender Weise gezeigt, dass eine sehr gute Füllgenauigkeit schon dann erreicht wird, wenn eine Füllglocke mit einem bestimmten Öffnungsdurchmesser zur Füllung von Rad/Reifenanordnungen zweier benachbarter Felgengrößen verwendet wird. Damit können bei sechs Füllglockendurchmessern Felgenaußendurchmesser im Bereich von 13 Zoll bis 24 Zoll, das sind zwölf verschiedene Größen, bedient werden. Dadurch ist es möglich, das gesamte am Markt verfügbare Räderspektrum für Personenkraftfahrzeuge in der verlangten Füllgenauigkeit mit nur einer Füllstation zu füllen.

Sieht man am der Füllplatte zugewandten Rand des Füllrings einen sich einwärts erstreckenden und im rechten Winkel zur Füllringachse verlaufenden ringscheibenförmigen Kragen vor, erhält man vorteilhaft eine größere Dicht- und Anlagefläche zwischen Füllring und Füllplatte.

Dadurch, dass die Füllplatte einen zylindrischen Vorsprung aufweist, der passgenau einer durch den Kragen begrenzten kreisförmigen Öffnung des Füllrings zuordenbar ist erhält man eine in Querrichtung stabile formschlüssige Verriegelung der zueinander zentrierten Elemente Füllring und Füllplatte.

Bei einer Ausführungsform gemäß Anspruch 7 können eventuell auftretende Winkelfehlstellungen der Anlageebenen an Füllplatte und Füllring kompensiert werden. Ebenso kann beim Vorgang des Ineinanderschiebens von Füllring und Füllplatte ein seitlicher Versatz von Füllringachse und Füllplattenachse ausgeglichen werden.

Dadurch, dass die Füllringe auf einer Kreislinie um die Nabe einer Karussell-Dreheinrichtung angeordnet sind, ergibt sich eine äußerst einfache Ausgestaltung zumal dann, wenn die Nabe der Karussell-Dreheinrichtung an einer ohnehin vorhandenen Säule, die Unter- und Oberteil des Maschinengestells miteinander verbindet, drehbar angeordnet ist.

Durch Anordnung der Füllringe an einer Linear-Bewegungseinrichtung läßt sich der vorhandene Raum oberhalb der linearen Führungsbahn der Rad/Reifenanordnungen in platzsparender Weise für eine kompakte Konstruktion ausnutzen.

Die axiale Verschiebbarkeit der Füllringe an ihrer Bewegungseinrichtung unter dem Einfluß der Kraft einer Feder gewährleistet definierte Positionierungen und eine sichere Anlage des ausgewählten Füllrings an der Füllplatte.

Weitere vorteilhafte Ausgestaltungen der Erfindung sind Gegenstand von Unteransprüchen.

Ausführungsformen der Erfindung sind in der Zeichnung dargestellt und werden im folgenden näher erläutert. Es zeigen
- Fig. 1: eine perspektivische Ansicht einer Ausführungsform einer erfindungsgemäßen Füllstation
- Fig. 2: eine perspektivische Ansicht der Füllstation mit der Karussell-Dreheinrichtung mit den Füllringen
- Fig. 3: eine perspektivische Ansicht der Karussell-Dreheinrichtung
- Fig. 4: eine perspektivische Darstellung der Anordnung eines Füllrings an der Karussell-Dreheinrichtung
- Fig. 5: die Füllstation nach Fig. 1 nach dem Eindrehen des ausgewählten Füllrings

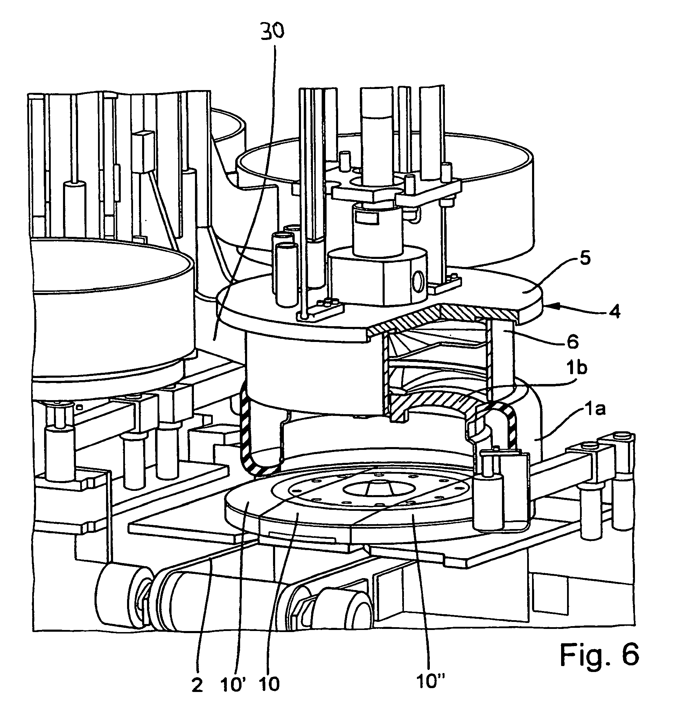

- Fig. 6: die Füllstation nach Fig. 1 vor dem Öffnen des ringförmigen Füllspalts
- Fig. 7: eine weitere Ausgestaltung von Füllring und Füllplatte
- Fig. 8: eine perspektivische Darstellung eines elastisch abgestützten Füllrings

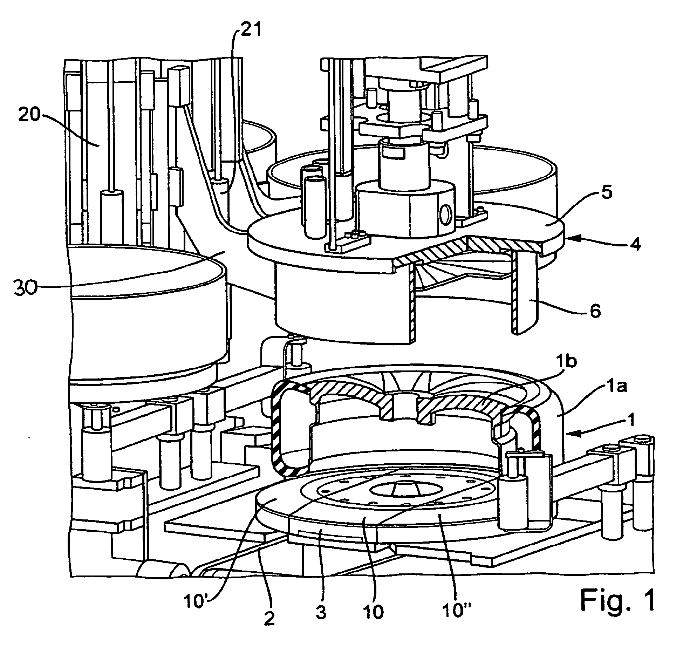

Der in Fig. 1 dargestellten Reifenfüllstation wird eine Rad-/Reifenanordnung 1 über eine Transporteinrichtung 2 zugeführt und auf einer Lager- und Dichteinrichtung 3 gelagert. Der Reifenfüllvorgang erfolgt als Druckluftfüllung über die mit 4 bezeichnete Reifenfüllglocke. Der Reifenfüllstation vorgeschaltet ist eine Reifenmontierstation, in der der Reifen 1a in bekannter Weise auf die Radfelge 1 b aufgebracht wird und danach als Rad/Reifenanordnung 1 in drucklosem Zustand zur Reifenfüllstation transportiert und nach dem Aufblasen von dort weitertransportiert wird. Die Stationen können als einzelne Module jeweils ein Maschinengestell aufweisen, es kann jedoch auch ein gemeinsames Maschinengestell für verschiedene Stationen vorgesehen sein.

Die Transporteinrichtung 2 weist zwei in der horizontalen Transportebene verlaufende zueinander beabstandete Transportmittel auf, die z.B. als Transportketten oder -riemen ausgebildet und an dem Maschinengestell 9 gelagert sind. Die Transportmittel verlaufen beiderseits der Drehachse der Rad/Reifenanordnung 1, wobei diese Achse vertikal zur Transportebene verläuft. Das heißt mit anderen Worten, dass die Rad/Reifenanordnung 1 liegend transportiert und behandelt wird.

In der Transportphase liegt die Rad/Reifenanordnung 1 mit diametral gegenüberliegenden Felgenseitenflächen oder Reifenseitenflächen auf den beiden Transportmitteln auf. In einem Hubschrittverfahren wird die Rad/Reifenanordnung 1 in angehobenem Zustand in die Reifenfüllstation transportiert bis sie zentrisch unter der Reifenfüllglocke 4 liegt und dann durch Absenken der Transporteinrichtung 2 auf den zentralen plattenförmigen Teil 10 der Lager- und Dichteinrichtung 3 aufgebracht. Die Transporteinrichtung 2 bzw. die beiden Transportmittel werden bis zum vollständigen Eintauchen in Aufnahmeräume des Maschinengestells 9 abgesenkt.

Die Lager- und Dichteinrichtung 3 ist mehrteilig aufgebaut und weist den zentralen plattenförmigen Teil 10 auf, der sich am Maschinengestell 9 abstützt und dessen Erstreckung in Transportrichtung größer ist als der Durchmesser der Auflagefläche der größten zu füllenden Rad/Reifenanordnung 1. Hierdurch ist eine stabile Lagerung der Rad/Reifenanordnung 1 auf dem zentralen Teil 10 gegeben. Die Lager- und Dichteinrichtung 3 weist zwei weitere plattenförmige Teile 10', 10" auf, die während der Transportphase zu beiden Seite der Bewegungsbahn der Transporteinrichtung 2 angeordnet sind. Nach dem Absenken der Transporteinrichtung 2 werden diese beiden seitlichen Teile 10', 10" in der Lagerebene quer zur Transportrichtung über die abgesenkten Transportmittel 5', 5" hinweg aufeinander zu bis zur jeweiligen Anlage am zentralen Teil 10 verschoben. Die aneinander liegenden Teile 10, 10', 10" der Lager- und Dichteinrichtung 3 sind mit Dichtvorrichtungen versehen. Die Lager- und Dichteinrichtung 3 ist in der Draufsicht als Kreisfläche ausgebildet; die beiden seitlichen Teile 10', 10" sind in Draufsicht kreisabschnittsförmig. Die Erstreckung der Lager- und Dichteinrichtung 3 in der Lagerebene quer zur Transportrichtung ist größer als der Durchmesser der Auflagefläche der größten zu füllenden Rad/Reifenanordnung.

Die in der Fig. 1 dargestellte Reifenfüllglocke 4 ist mehrteilig ausgebildet und ist im wesentlichen aus einer Füllplatte 5 und einem Füllring 6 zusammengesetzt.

Die Füllplatte 5 ist mit der Plattenebene quer zur Achslinie der Rad/Reifenanordnung 1 angeordnet. Im dargestellten Ausführungsbeispiel ist die Füllplatte 5 als Kreisplatte ausgeführt und zentrisch zur Achslinie ausgerichtet Die Füllplatte 5 ist bewegbar am Maschinengestell 9 abgestützt und beispielsweise fluidbetätigt relativ zur Rad/Reifenanordnung 1 bewegbar. In der in Fig. 1 dargestellten Stellung steht sie oberhalb der Rad/Reifenanordnung 1 zum Füllvorgang bereit. Die Füllplatte 5 weist eine Druckluftzuführöffnung in den Glockeninnenraum auf und ist über einen Leitung mit der Druckluftquelle z.B. einem Druckluftbehälter verbunden.

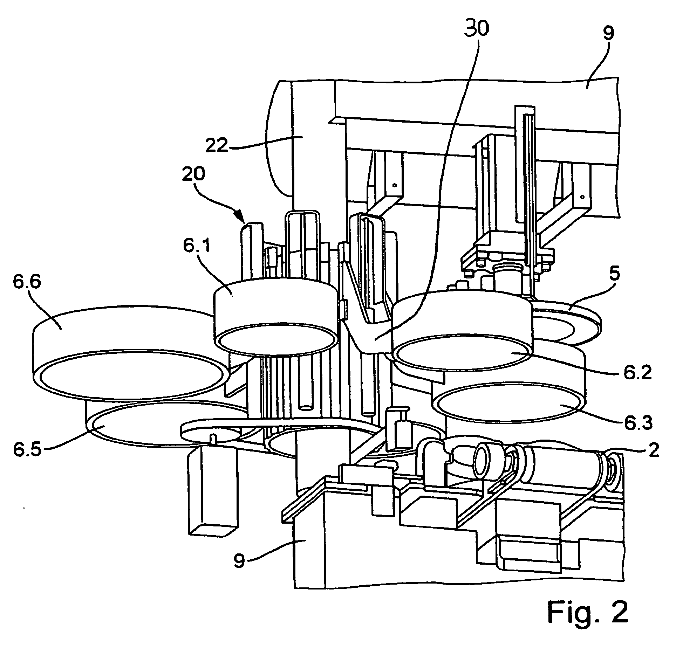

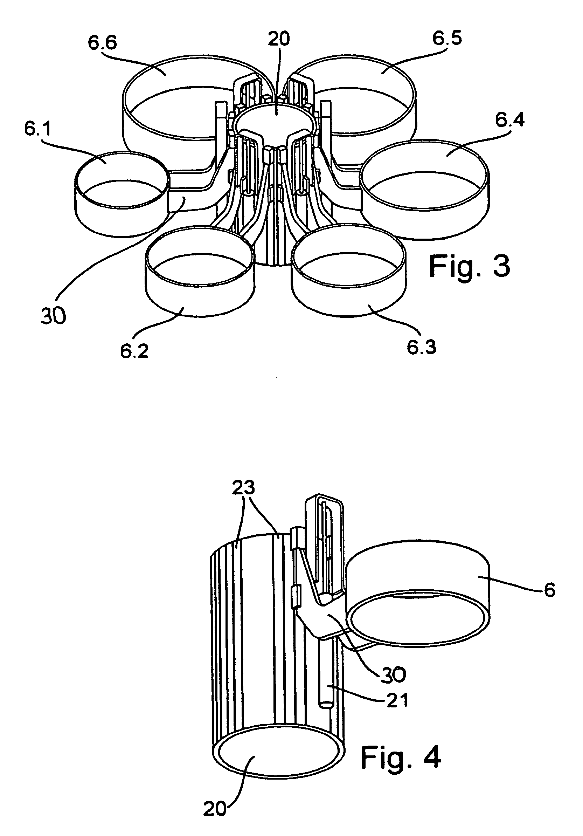

Der Füllring 6 liegt in der Darstellung nach Fig. 1 mit dem oberen Rand abgedichtet an der Füllplatte 5 an und bildet so mit ihr die Reifenfüllglocke 4. Der Füllring 6 ist bei der erfindungsgemäßen Ausgestaltung einer von sechs Füllringen 6.1 bis 6.6 (Fig. 2 und Fig. 3) und ist hinsichtlich seines Durchmessers nach dem Felgenaußendurchmesser der zu füllenden Rad/Reifenanordnung 1 so ausgesucht worden, dass zwischen Füllringinnendurchmesser und Felgenaußendurchmesser ein Ringspalt vorgegebener Größe vorhanden ist. Der Ringspalt ist derart bestimmt, dass ein Füllring 6 bei einer Felgenreihe für zwei Felgen mit unterschiedlichen, aber aufeinanderfolgenden Außendurchmessern zur Füllung unter Gewährleistung eines vorgegebenen Fülldrucks verwendet werden kann.

Um den ausgewählten Füllring 6 der Füllplatte 5 zuzuordnen, ist eine Bewegungseinrichtung 20 vorgesehen, an der die einzelnen Füllringe 6.1 bis 6.6 axial verschieblich befestigt sind. Alle Mittelpunkte der Füllringe 6.1 bis 6.6 liegen wie aus Fig. 2 ersichtlich auf einer Kreislinie um die Nabenachse der als Karussell-Dreheinrichtung ausgebildeten Bewegungseinrichtung 20. Die Nabe der Karussell-Dreheinrichtung ist in vorgegebener axialer Höhe auf einer das Oberteil und das Unterteil des Maschinengestells 9 verbindenden Säule 22 drehbar angeordnet. Jeder Füllring 6.1 bis 6.6 ist axial gegen eine gegen die Füllplatte 5 gerichtete Kraft einer Gasfeder 21 in Richtung auf die Rad/Reifenanordnung 1 verschiebbar. Die Gasfeder 21 drückt den Füllring in eine für alle Füllringe 6.1 bis 6.6 einheitliche axiale Position. Alle Füllringe 6.1 bis 6.6 haben eine einheitliche Höhe. Bei der Axialbewegung wird der Füllring 6.1 bis 6.6 mit einem gabelförmigen Halter 30 in jeweils zwei Längsnuten 23 der Nabe geführt, siehe Fig. 4.

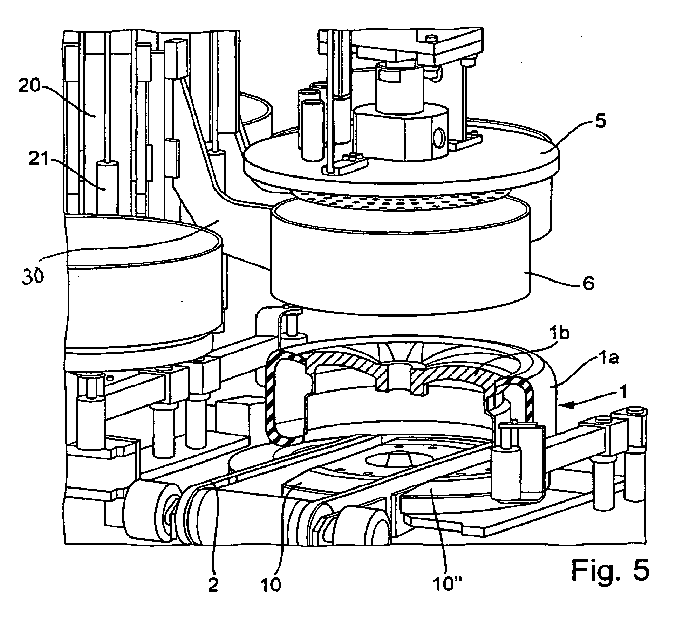

Die Karussell-Dreheinrichtung dreht mittels beispielsweise eines Elektroantriebs den ausgewählten Füllring 6 soweit, bis die Füllringachse mit der gemeinsamen Achslinie der Rad/Reifenanordnung 1 und der Füllplatte 5 zur Deckung kommt, wie dies aus Fig. 5 ersichtlich ist.

Die Füllplatte 5 wird bis zur abgedichteten Anlage am oberen Rand des Füllrings 6 in Richtung auf die Rad/Reifenanordnung 1 verschoben. Der Druck der Gasfeder 21 stellt die abgedichtete Anlage des Füllrings 6 an der Füllplatte 5 sicher.

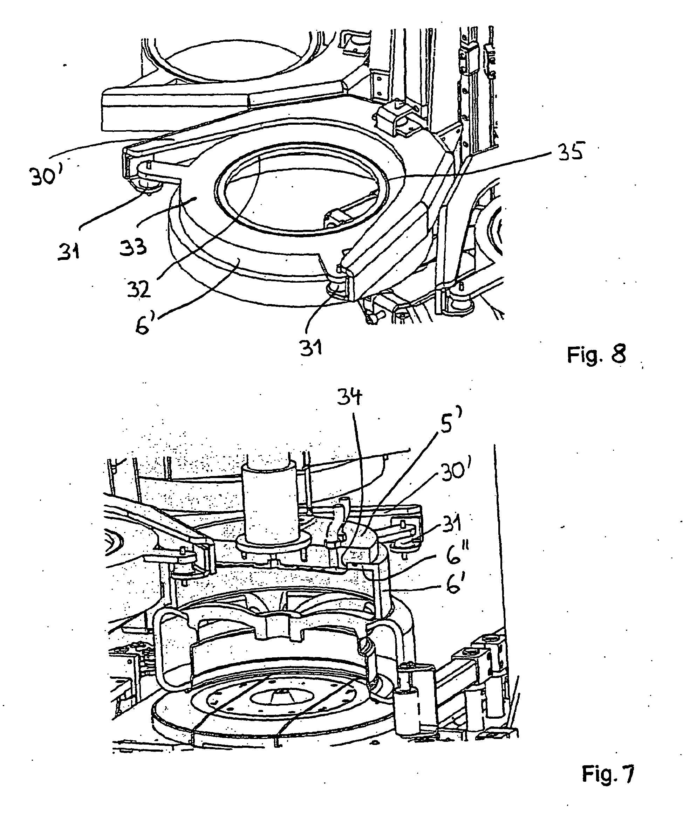

In den Figuren 7 und 8 ist eine etwas abgewandelte Ausführungsform von Füllring und Füllplatte dargestellt. Dabei weist der Füllring 6' an seinem der Füllplatte 5' zugewandten Ende einen ringscheibenförmigen Kragen 6" auf, der sich einwärts erstreckt und im rechten Winkel zur Füllringachse verläuft. Der Kragen 6" begrenzt eine kreisförmige Öffnung 32. Durch den Kragen 6" ist so eine Anlagefläche 33, siehe Fig. 8, in Form einer Kreisringscheibe gebildet, mit der der Füllring 6' gegen die Füllplatte 5' anlegbar ist. Die Anlagefläche 33 kann zusätzlich noch eine Ringnut zur Aufnahme eines zusätzlichen Dichtrings 35 aufweisen. Die Öffnung 32 hat bei allen Füllringen 6' einen einheitlichen Durchmesser.

Zur gegenseitigen Zentrierung von Füllring 6' und Füllplatte 5' weist die Füllplatte 5' einen zylindrischen Vorsprung 34 auf, der passgenau in die kreisförmige Öffnung 32 des Füllrings 6' eingreift und eine stabile formschlüssige Verriegelung des zentrierten Zustands sicherstellt.

Zur Erleichterung des Zentriervorgangs kann ein konischer Abschnitt an zumindest einer der beiden ineinander greifenden Flächen von Füllring 6' und Füllplatte 5' vorgesehen werden.

Die Ausgestaltung nach den Fig. 7 und 8 bietet eine große Dicht- bzw. Anlagefläche zwischen Füllring 6' und Füllplatte 5'.

Bei der in Fig. 7 näher dargestellten Ausführungsform ist der Füllring 6' im Vergleich zu der Ausführungsform nach Fig. 5 zusätzlich über drei elastische Elemente 31 mit dem gabelförmigen Halter 30' verbunden. Die elastischen Elemente 31 sind im Ausführungsbeispiel in einer Ebene jeweils um 120° zueinander versetzt angeordnet. Mit den elastischen Elementen 31 können eventuell auftretende Winkelfehlstellungen der Anlageebenen an Füllplatte 5' und Füllring 6' kompensiert werden. Ebenso kann beim Vorgang des Ineinanderschiebens von Füllring 6' und Füllplatte 5' ein seitlicher Versatz von Füllringachse und Füllplattenachse ausgeglichen werden.

Die Position der Reifenfüllglocke 4 in Fig. 1 stellt die Bereitschaftsstellung dar.

Die Reifenfüllung läuft wie folgt ab.

Die Rad/Reifenanordnung 1 liegt auf der aus ihren Teilen 10, 10', 10" zusammengesetzten Lager- und Dichteinrichtung 3 auf, wobei die Reifenseitenwand, den Innenraum abdichtend, auf der aus den Teilen 10, 10', 10" zusammengesetzten Dichtfläche aufliegt. Der Rand des Füllrings 6 bzw. 6' hat nach Bewegung der Reifenfüllglocke 4 nach unten gegen die rückhaltende Kraft der Gasfeder 21 schließlich die Reifenseitenwand abgehoben. Die Eintauchtiefe des Füllrings 6 bzw. 6' wird automatisch über einen Weggeber gesteuert in Abhängigkeit von den Fülleigenschaften der jeweiligen Rad/Reifenanordnung 1 durch ein radtypenspezifisches Füllprogramm. Nun erfolgt die Druckluftfüllung, wobei der Innenraum der Reifenfüllglocke 4, der Reifeninnenraum und die Dichtfläche aus den Teilen 10, 10', 10" der Lager- und Dichteinrichtung 3 einen gegenüber der Umgebung abgeschlossenen Raum definieren. Im Verlauf des Füllvorgangs wird durch den Druckaufbau auch die obere Reifenseitenwand gegen die vom Füllring 6, 6' bzw. der Füllplatte 5, 5' ausgeübte Kraft unter Verschiebung des Füllrings 6, 6' nach oben gegen das Felgenhorn gepreßt. Durch die gesteuerte Hubbewegung der Reifenfüllglocke 4 wird eine sehr hohe Füllgenauigkeit und ein guter Sitz des oberen Reifenwulstes erreicht. Nach dem Füllvorgang wird der Druck in der Reifenfüllglocke 4 über separate, nicht näher bezeichnete Auslassventile abgelassen. Die Füllplatte 5 bzw. 5' wird anschließend von ihrer Bewegungseinrichtung gemeinsam mit dem durch die Kraft der Gasfeder 21 anliegenden Füllring 6 bzw. 6' nach oben bewegt. Nach erreichen der axialen Position des Füllrings 6, 6' für den Drehvorgang wird die Füllplatte 5, 5' unter Trennung vom Füllring 6 anschließend in ihre während des Transports der Rad/Reifenanordnung 1 vorgesehene Stellung bewegt, die seitlichen Teile 10', 10" der Lager- und Dichteinrichtung 3 werden auseinandergefahren, die Transporteinrichtung 2 angehoben und das gefüllte Rad, das auf den Transportmitteln aufliegt, weiter transportiert.

Es liegt im Rahmen der Erfindung, die Reifenfüllstation mit der erfindungsgemäßen mehrteiligen Reifenfüllglocke als Einzelmaschine auszubilden, der die Rad/Reifenanordnungen manuell statt mittels einer Transporteinrichtung zugeführt und entnommen werden; dabei kann die mehrteilige Ausführung der Auflageplatte (Lager- und Dichteinrichtung 3) entfallen.

Die Fülldruckprogramme sind manuell oder über Programmsteuerung anwählbar.

Der zentrale Teil der Lager- und Dichteinrichtung 3 kann in nicht dargestellter Weise einen Vorsprung aufweisen, der sich in den gegenüberliegenden Felgeninnenraum erstreckt und diesen zu einem großen Teil ausfüllt. Der Vorsprung kann am zentralen Teil ausgeformt sein, es kann aber auch ein Formstück an dem zentralen Teil angeordnet sein. Eine derartige Ausgestaltung verringert das Füllvolumen, da ein Teil des beim Füllvorgang abgedichteten Gesamtraums durch den Vorsprung ausgefüllt wird und dieses Volumen nicht mit Druckluft gefüllt wird. Deshalb wird der Totraum, d.h der nicht vom Reifen umschlossene, restliche abgedichtete Raum, verringert. Der Vorsprung kann auch einen Zentrieransatz zwecks zentrierter Aufnahme der Rad/Reifenanordnung aufweisen.

Es liegt im Rahmen der Erfindung, die erfindungsgemäß ausgestaltete Reifenfüllglocke nicht nur bei "dichtringlosen" Füllstationen - wie vorstehend beschrieben - sondern auch bei Füllstationen zu verwenden, die mit Felgen-Dichtringen arbeiten wie dies in der DE 198 01 455 A1 offenbart ist.

## Patentansprüche

1. Reifenfüllstation, der aus einer Radfelge und einem auf die Radfelge montierten Reifen bestehende Rad/Reifenanordnungen (1) zuführbar sind, mit einer Reifenfüllglocke (4) mit zumindest zwei Füllringen (6, 6') unterschiedlichen Durchmessers, wobei der Rand eines Füllrings (6, 6') gegen eine Seitenfläche des Reifens anlegbar ist und mit einer Dichteinrichtung (3) zur Abdichtung des Füllraums, wobei die Reifenfüllglocke (4) eine längs der Achslinie der Rad/Reifenanordnung (1) bewegbare Füllplatte (5, 5') und einen separaten, in der Achslinie der Rad/Reifenanordnung in zentrischer Lage bewegbaren Füllring (6, 6') umfaßt, wobei die Füllplatte (5, 5') gegen den der Seitenfläche des Reifens (1a) abgewandten Rand des zentrisch angeordneten Füllrings (6. 6') anlegbar und gemeinsam mit diesem verschiebbar ist, **dadurch gekennzeichnet, dass** jeder der Füllringe (6, 6') quer zur Achslinie der Rad-/Reifenanordnung (1) in die Achslinie bewegbar ist und dass die Reifenfüllglocke (4) jeweils aus der Füllplatte (5, 5') und einem der Füllringe (6, 6') zusammengesetzt ist.

2. Reifenfüllstativn nach Anspruch 1, **dadurch gekennzeichnet, dass** der Rand des Füllrings (6') einen sich einwärts erstreckenden und im rechten Winkel zur Füllringachse verlaufenden ringscheibenförmigen Kragen (6") aufweist.

3. Reifenfüllstation nach Anspruch 2, **dadurch gekennzeichnet, dass** die Füllplatte (5') einen zylindrischen Vorsprung (34) aufweist, der passgenau einer durch den Kragen (6") begrenzten kreisförmigen Öffnung (32) des Füllrings (6') zuordenbar ist.

4. Reifenfüllstation nach Anspruch 3, **dadurch gekennzeichnet, dass** an zumindest einer der beiden ineinander schiebbaren Flächen von Füllring (6') und Füllplatte (5') ein konischer Abschnitt vorgesehen ist.

5. Reifenfüllstation nach einem der vorhergehenden Ansprüche, **dadurch gekennzeichnet, dass** mehr als zwei, vorzugsweise sechs Füllringe (6.1 bis 6.6) unterschiedlicher Durchmesser längs einer Linie, vorzugsweise auf einer Kreislinie oder linear quer zur Achslinie der Rad-/Reifenanordnung (1) in die Achslinie bewegbar sind.

6. Reifenfültstation nach einem der vorhergehenden Ansprüche, **dadurch gekennzeichnet, dass** die Füllringe (6.1 bis 6.6) an einer Bewegungseinrichtung (20) angeordnet sind.

7. Reifenfüllstation nach einem der vorhergehenden Ansprüche, **dadurch gekennzeichnet, dass** die Füllringe (6') jeweils über mindestens zwei, vorzugsweise drei elastische Elemente (31) mit einem gabelförmigen Halter (30') der Bewegungseinrichtung (20) verbunden sind.

8. Reifenfüllstation nach Anspruch 6 oder Anspruch 7, **dadurch gekennzeichnet, dass** die Füllringe (6.1 bis 6.6) auf einer Kreislinie um die Nabe einer Karussell-Dreheinrichtung an dieser angeordnet sind.

9. Reifenfüllstation nach Anspruch 6 oder Anspruch 7, **dadurch gekennzeichnet, dass** die Füllringe (6.1 bis 6.6) an einer Linear-Bewegungseinrichtung angeordnet sind.

10. Reifenfüllstation nach einem der vorhergehenden Ansprüche, **dadurch gekennzeichnet, dass** die Füllringe (6.1 bis 6.6) axial verschieblich an ihrer Bewegungseinrichtung (20) angeordnet sind und jeweils durch eine Federeinrichtung, vorzugsweise eine Gasfeder (21), eine Stahl-Schraubendruckfeder oder einen Pneumatik-Zylinder unter permanentem einem Druckraum des Zylinders zugeführten pneumatischen Druck in einer axialen Grundposition gehalten sind.

11. Reifenfüllstation nach einem oder mehreren der vorhergehenden Ansprüche,
**dadurch gekennzeichnet, dass** die Reifenfüllstation Teil eines Reifenmontagesystems und/oder einer Räderauswuchtanlage mit eine Transporteinrichtung umgebenden Meß- und/oder Bearbeitungsstationen ist.

12. Verfahren zur Reifenfüllung eines auf einer Radfelge montierten Reifens in einer Reifenfüllstation, bei dem die Rad/Reifenanordnung (1) in die Reifenfüllstation gebracht und dort gelagert wird, bei dem mittels einer Reifenfüllglocke (4), die zumindest zwei Füllringe (6, 6') unterschiedlichen Durchmessers umfaßt, durch Anlegen eines Füllrings (6, 6') an einer Seitenfläche ein ringförmiger Zugang zwischen Reifen (1a) und Radfelge (1b) zur Füllung des Reifens (1a) mit Druckluft hergestellt und der Füllraum ansonsten abgedichtet wird und die Füllung erfolgt, **dadurch gekennzeichnet, dass** für den Füllvorgang zunächst die Füllglocke (4) aus einer Füllplatte (5, 5') und einem separaten Füllring (6, 6'), der zentrisch in die Achslinie der Rad/Reifenanordnung (1) bewegt wird, zusammengesetzt wird und danach durch Anlegen der Füllplatte (5, 5') an einen Rand des Füllrings (6, 6') und gemeinsame Verschiebung von Füllplatte (5, 5') und Füllring (6, 6') in der Achslinie mit dem anderen Rand des Füllrings (6, 6') der ringförmige Zugang hergestellt wird.

13. Verfahren zur Reifenfüllung eines auf einer Radfelge montierten Reifens (1a) in einer Reifenfüllstation, bei dem die Rad/Reifenanordnung (1) in die Reifenfülistation gebracht und dort gelagert wird, bei dem mittels einer Reifenfüllglocke (4), die zumindest zwei Füllringe (6, 6') unterschiedlichen Durchmessers umfaßt, durch Anlegen eines Füllrings (6, 6') an einer Seitenfläche ein ringförmiger Zugang zwischen Reifen (1a) und Radfelge (1b) zur Füllung des Reifens (1a) mit Druckluft hergestellt und der Füllraum ansonsten abgedichtet wird und die Füllung erfolgt, **dadurch gekennzeichnet, dass** zur Abdichtung die andere Seitenfläche des Reifens (1a) an einer Lager- und Dichteinrichtung (3) abgedichtet wird, die aus mehreren Dichtflächen (10, 10', 10'') zusammengefügt wird und dass für den Füllvorgang zunächst die Füllglocke (4) aus einer Füllplatte (5, 5') und einem separaten Füllring (6, 6'), der zentrisch in die Achslinie der Rad/Reifenanordnung (1) bewegt wird, zusammengesetzt wird und danach durch Anlegen der Füllplatte (5, 5') an einen Rand des Füllrings (6, 6') und gemeinsame Verschiebung von Füllplatte (5, 5') und Füllring (6, 6') in der Achslinie mit dem anderen Rand des Füllrings (6, 6') der ringförmige Zugang hergestellt wird.

14. Verfahren nach Anspruch 12 oder Anspruch 13, **dadurch gekennzeichnet, dass** der Füllring (6, 6') entsprechend dem Reifen- bzw. Felgendurchmesser zum Einsatz ausgewählt wird.

15. Reifenfüllstafion, der aus einer Radfelge und einem auf die Radfelge montierten Reifen bestehende Rad/Reifenanordnungen (1) zuführbar sind, mit einer Reifenfüllglocke (4) mit zumindest zwei Füllringen (6, 6') unterschiedlichen Durchmessers, wobei der Rand eines Füllrings (6, 6') gegen eine Seitenfläche des Reifens anlegbar ist und mit einer Dichteinrichtung (3) zur Abdichtung des Füllraums, **dadurch gekennzeichnet, dass** die Reifenfüllglocke (4) eine längs der Achslinie der Rad/Reifenanordnung (1) bewegbare Füllplatte (5, 5') und einen separaten, in die Achslinie der Rad/Reifenanordnung in zentrische Lage bewegbaren Füllring (6, 6') umfaßt, wobei die Füllplatte (5, 5') gegen den der Seitenfläche des Reifens (1a) abgewandten Rand des zentrisch angeordneten Füllrings (6, 6') anlegbar und gemeinsam mit diesem verschiebbar ist und dass die Dichteinrichtung als mehrteilige Lager- und Dichteinrichtung (3) für die andere Seitenfläche des Reifens (1a) ausgebildet ist, deren Teile (10, 10', 10") zum Reifenfüllvorgang gegeneinander dichtend anlegbar sind.

## Claims

1. A tire inflation station to which wheel/tire arrangements (1) comprised of a wheel rim and a tire fitted to the wheel rim are adapted to be fed, with a tire inflation bell (4) having at least two inflation rings (6, 6') of different diameter, with the rim of one inflation ring (6, 6') being engageable against one lateral surface of the tire, and with a sealing device (3) for sealing the inflation chamber, said tire inflation bell (4) comprising an inflation plate (5, 5') movable longitudinally to the axis line of the wheel/tire arrangement (1), and a separate inflation ring (6, 6') movable in the axis line of the wheel/tire arrangement into a centric position, said inflation plate (5, 5') being engageable against the rim of the centrically arranged inflation ring (6, 6') on the side facing away from the lateral surface of the tire (1a) and being slidable together with said ring, **characterized in that** each of said inflation rings (6, 6') is movable transversely to the axis line of the wheel/tire arrangement (1) into the axis line, and that the tire inflation bell (4) is composed of the inflation plate (5, 5') and one of the inflation rings (6, 6').

2. The tire inflation station according to claim 1, **characterized in that** the rim of the inflation ring (6') includes an annular-ring-shaped collar (6") extending inwardly and at right angles to the axis of the inflation ring.

3. The tire inflation station according to claim 2, **characterized in that** the inflation plate (5') includes a cylindrical projection (34) adapted to fit snugly within a circular opening (32) of the inflation ring (6') bounded by the collar (6").

4. The tire inflation station according to claim 3, **characterized in that** a conical section is provided on at least one of the two nesting surfaces of inflation ring (6') and inflation plate (5').

5. The tire inflation station according to any one of the preceding claims, **characterized in that** more than two, preferably six inflation rings (6.1 to 6.6) of different diameter are arranged for movement along a line, preferably on a circular line or linearly transverse to the axis line of the wheel/tire arrangement (1) into the axis line.

6. The tire inflation station according to any one of the preceding claims, **characterized in that** the inflation rings (6.1 to 6.6) are arranged on a moving device (20).

7. The tire inflation station according to any one of the preceding claims, **characterized in that** the inflation rings (6') are connected to a respective forkshaped holder (30') of the moving device (20) by means of at least two, preferably three elastic elements (31).

8. The tire inflation station according to claim 6 or claim 7, **characterized in that** the inflation rings (6.1 to 6.6) are arranged on a circular line around and on the hub of a carousel-type revolving device.

9. The tire inflation station according to claim 6 or claim 7, **characterized in that** the inflation rings (6.1 to 6.6) are arranged on a linear moving device.

10. The tire inflation station according to any one of the preceding claims, **characterized in that** the inflation rings (6.1 to 6.6) are axially slidably arranged on their moving device (20) and are held in an axial basic position by a respective spring device, preferably a gas spring (21), a helical steel compression spring or a pneumatic cylinder at a permanent pneumatic pressure supplied to a pressure chamber of the cylinder.

11. The tire inflation station according to any one or several of the preceding claims, **characterized in that** the tire inflation station is part of a tire assembly system and/or a wheel balancing facility with measuring and/or processing stations surrounding a transfer device.

12. A method of inflating a tire fitted to a wheel rim in a tire inflation station, which includes loading the wheel/tire arrangement (1) into the tire inflation station and holding it there, producing, by means of a tire inflation bell (4) comprising at least two inflation rings (6, 6') of different diameter and by applying an inflation ring (6, 6') against one lateral surface, an annular access between tire (1a) and wheel rim (1b) for inflating the tire (1a) with compressed air, the inflation chamber being otherwise sealed and inflation being performed, **characterized in that** for the inflation process first the inflation bell (4) is assembled from an inflation plate (5, 5') and a separate inflation ring (6, 6') which is moved centrically into the axis line of the wheel/tire arrangement (1), and that then, by applying the inflation plate (5, 5') against a rim of the inflation ring (6, 6') and by joint displacement of inflation plate (5, 5') and inflation ring (6, 6') in the axis line, the annular access is produced with the other rim of the inflation ring (6, 6').

13. The method of inflating a tire (1a) fitted to a wheel rim in a tire inflation station, which includes loading the wheel/tire arrangement (1) into the tire inflation station and holding it there, producing, by means of a tire inflation bell (4) comprising at least two inflation rings (6, 6') of different diameter and by applying an inflation ring (6, 6') against one lateral surface, an annular access between tire (1a) and wheel rim (1b) for inflating the tire (1 a) with compressed air, the inflation chamber being otherwise sealed and inflation being performed, **characterized in that** for sealing, the other lateral surface of the tire (1a) is sealed on a supporting and sealing device (3) assembled from a plurality of sealing surfaces (10, 10', 10"), and that for the inflation process first the inflation bell (4) is assembled from an inflation plate (5, 5') and a separate inflation ring (6, 6') which is moved centrically into the axis line of the wheel/tire arrangement (1), and that then, by applying the inflation plate (5, 5') against a rim of the inflation ring (6, 6') and by joint displacement of inflation plate (5, 5') and inflation ring (6, 6') in the axis line, the annular access is produced with the other rim of the inflation ring (6,6').

14. The method as claimed in claim 12 or claim 13, **characterized in that** the inflation ring (6, 6') is selected for use in accordance with the tire or wheel rim diameter.

15. A tire inflation station to which wheel/tire arrangements (1) comprised of a wheel rim and a tire fitted to the wheel rim are adapted to be fed, with a tire inflation bell (4) having at least two inflation rings (6, 6') of different diameter, with the rim of one inflation ring (6, 6') being engageable against one lateral surface of the tire, and with a sealing device (3) for sealing the inflation chamber, **characterized in that** the tire inflation bell (4) comprises an inflation plate (5, 5') which is movable along the axis line of the wheel/tire arrangement (1), and a separate inflation ring (6, 6') movable into the axis line of the wheel/tire arrangement into a centric position, said inflation plate (5, 5') being engageable against the rim of the centrically arranged inflation ring (6, 6') on the side facing away from the lateral surface of the tire (1a) and being slidable together with said ring, and that the sealing device is constructed as a multi-part supporting and sealing device (3) for the other lateral surface of the tire (1 a) whose parts (10, 10', 10") are adapted for sealing engagement with one another to perform the tire inflation process.

## Revendications

1. Station de gonflage de pneu à laquelle peuvent être amenés des ensembles pneu/jante (1) constitués d'une jante et d'un pneu monté sur la jante, comprenant une cloche de gonflage de pneu (4) dotée d'au moins deux bagues de gonflage (6, 6') de diamètres différents, le bord d'une bague de gonflage (6, 6') pouvant être appliqué contre une surface latérale du pneu, et comprenant un dispositif d'étanchéité (3) destiné à étanchéifier l'espace de gonflage, la cloche de gonflage de pneu (4) comprenant une plaque de gonflage (5, 5') mobile le long de la ligne axiale de l'ensemble pneu/jante (1) et une bague de gonflage (6, 6') séparée, mobile dans la ligne axiale de l'ensemble pneu/jante dans une position centrale, la plaque de gonflage (5, 5') pouvant être appliquée contre le bord de la bague de gonflage (6, 6'), disposée de manière centrale, opposé à la surface latérale du pneu (1a), et étant mobile conjointement avec ledit bord, **caractérisée en ce que** chacune des bagues de gonflage (6, 6') peut être déplacée dans la ligne axiale transversalement à la ligne axiale de l'ensemble pneu/jante (1) et **en ce que** la cloche de gonflage de pneu (4) est composée de la plaque de gonflage (5, 5') et d'une des bagues de gonflage (6, 6').

2. Station de gonflage de pneu selon la revendication 1, **caractérisée en ce que** le bord de la bague de gonflage (6') comprend une collerette en forme de disque annulaire (6") s'étendant vers l'intérieur et perpendiculairement à l'axe de la bague de gonflage.

3. Station de gonflage de pneu selon la revendication 2, **caractérisée en ce que** la plaque de gonflage (5') comprend une saillie cylindrique (34) pouvant être associée avec une précision d'ajustage à une ouverture circulaire (32) de la bague de gonflage (6') délimitée par la collerette (6").

4. Station de gonflage de pneu selon la revendication 3, **caractérisée en ce qu'**une section conique est prévue sur au moins une des deux surfaces pouvant être poussées l'une dans l'autre de la bague de gonflage (6') et de la plaque de gonflage (5').

5. Station de gonflage de pneu selon l'une des revendications précédentes, **caractérisée en ce que** plus de deux, de préférence six bagues de gonflage (6.1 à 6.6) de diamètres différents peuvent être déplacées dans la ligne axiale le long d'une ligne, de préférence sur un cercle ou linéairement, transversalement à la ligne axiale de l'ensemble pneu/jante (1).

6. Station de gonflage de pneu selon l'une des revendications précédentes, **caractérisée en ce que** les bagues de gonflage (6.1 à 6.6) sont disposées sur un dispositif de déplacement (20).

7. Station de gonflage de pneu selon l'une des revendications précédentes, **caractérisée en ce que** les bagues de gonflage (6') sont chacune reliées à un support (30') en forme de fourche du dispositif de déplacement (20) par au moins deux, de préférence trois éléments élastiques (31).

8. Station de gonflage de pneu selon la revendication 6 ou la revendication 7, **caractérisée en ce que** les bagues de gonflage (6.1 à 6.6) sont disposées sur un dispositif de rotation à carrousel sur un cercle s'étendant autour du moyeu de celui-ci.

9. Station de gonflage de pneu selon la revendication 6 ou la revendication 7, **caractérisée en ce que** les bagues de gonflage (6.1 à 6.6) sont disposées sur un dispositif de déplacement linéaire.

10. Station de gonflage de pneu selon l'une des revendications précédentes, **caractérisée en ce que** les bagues de gonflage (6.1 à 6.6) sont montées mobiles axialement sur leur dispositif de déplacement (20) et sont chacune maintenues dans une position de base axiale par un dispositif ressort, de préférence un ressort à gaz (21), un ressort de compression hélicoïdal en acier ou un cylindre pneumatique soumis à une pression pneumatique permanente apportée à une chambre de compression du cylindre.

11. Station de gonflage de pneu selon l'une ou plusieurs des revendications précédentes, **caractérisée en ce que** la station de gonflage de pneu fait partie d'un système de montage de pneu et/ou d'une installation d'équilibrage de pneu dotés de stations de mesure et/ou de traitement entourant un dispositif de transport.

12. Procédé de gonflage d'un pneu monté sur une jante dans une station de gonflage de pneu, selon lequel l'ensemble pneu/jante (1) est amené dans la station de gonflage de pneu et y est conservé, selon lequel, au moyen d'une cloche de gonflage de pneu (4) comprenant au moins deux bagues de gonflage (6, 6') de diamètres différents, un accès annulaire entre le pneu (1a) et la jante (1b) est établi, pour gonfler le pneu (1a) avec l'air comprimé, par application d'une bague de gonflage (6, 6') sur une surface latérale, et l'espace de gonflage est par ailleurs rendu étanche et le gonflage est réalisé, **caractérisé en ce que** pour le processus de gonflage, la cloche de gonflage (4) est tout d'abord assemblée à partir d'une plaque de gonflage (5, 5') et d'une bague de gonflage séparée (6, 6') déplacée de manière centrale dans la ligne axiale de l'ensemble pneu/jante (1), puis l'accès annulaire est établi avec l'autre bord de la bague de gonflage (6, 6') par application de la plaque de gonflage (5, 5') sur un bord de la bague de gonflage (6, 6') et le déplacement conjoint de la plaque de gonflage (5, 5') et de la bague de gonflage (6, 6') dans la ligne axiale,.

13. Procédé de gonflage d'un pneu (1a) monté sur une jante dans une station de gonflage de pneu, selon lequel l'ensemble pneu/jante (1) est amené dans la station de gonflage de pneu et y est conservé, selon lequel au moyen d'une cloche de gonflage de pneu (4) comprenant au moins deux bagues de gonflage (6, 6') de diamètres différents, un accès annulaire entre le pneu (1a) et la jante (1b) est établi, pour gonfler le pneu (1a) avec de l'air comprimé, par application d'une bague de gonflage (6, 6') sur une surface latérale, et l'espace de gonflage est par ailleurs rendu étanche et le gonflage est réalisé, **caractérisé en ce que** pour l'étanchéité, l'autre surface latérale du pneu (1a) est rendue étanche sur un dispositif support et d'étanchéité (3) composé de plusieurs surfaces d'étanchéité (10, 10', 10") et **en ce que** pour le processus de gonflage la cloche de gonflage (4) est tout d'abord assemblée à partir d'une plaque de gonflage (5, 5') et d'une bague de gonflage séparée (6, 6') déplacée de manière centrale dans la ligne axiale de l'ensemble pneu/jante (1), puis l'accès annulaire est établi avec l'autre bord de la bague de gonflage (6, 6') par application de la plaque de gonflage (5, 5') sur un bord de la bague de gonflage (6, 6') et le déplacement conjoint de la plaque de gonflage (5, 5') et de la bague de gonflage (6, 6') dans la ligne axiale.

14. Procédé selon la revendication 12 ou la revendication 13, **caractérisé en ce que** la bague de gonflage (6, 6') est choisie en fonction du diamètre de pneu ou de jante à utiliser.

15. Station de gonflage de pneu à laquelle peuvent être amenés des ensembles pneu/jante (1) constitués d'une jante et d'un pneu monté sur la jante, comprenant une cloche de gonflage de pneu (4) dotée d'au moins deux bagues de gonflage (6, 6') de diamètres différents, le bord d'une bague de gonflage (6, 6') pouvant être appliqué contre une surface latérale du pneu, et comprenant un dispositif d'étanchéité (3) destiné à étanchéifier l'espace de gonflage, **caractérisée en ce que** la cloche de gonflage de pneu (4) comprend une plaque de gonflage (5, 5') mobile le long de la ligne axiale de l'ensemble pneu/jante (1) et une bague de gonflage (6, 6') séparée, mobile dans la ligne axiale de l'ensemble pneu/jante dans une position centrale, la plaque de gonflage (5, 5') pouvant être appliquée contre le bord de la bague de gonflage (6, 6'), disposée de manière centrale, opposé à la surface latérale du pneu (1a), et étant mobile conjointement avec ledit bord et **en ce que** le dispositif d'étanchéité est réalisé sous la forme d'un dispositif de montage et d'étanchéité (3) en plusieurs parties pour l'autre surface latérale du pneu (1a) et dont les parties (10, 10', 10") peuvent être appliquées les unes contre les autres de manière étanche pour le processus de gonflage de pneu.
